# EUROPEAN PATENT APPLICATION

(11) **EP 4 632 942 A1**
(43) Date of publication of application: **15.10.2025**
(21) Application number: 23904014.0
(22) Date of filing: 13.12.2023
(51) Int. Cl.: H01M 50/593, H01M 50/586, H01M 50/211, H01M 50/249

(54) **BATTERY MODULE INSULATION STRUCTURE**

(30) Priority: 15.12.2022 KR 20220175923
(71) Applicant: LG Energy Solution, Ltd., Seoul 07335 (KR)
(72) Inventor: HONG, Minseok, Daejeon 34122 (KR); KIM, Min Seop, Daejeon 34122 (KR)
(74) Representative: Plasseraud IP
(86) International application number: PCT/KR2023/020590
(87) International publication number: WO 2024/128815

(57) **Abstract**

The present invention provides a structure of a battery module including: an electrode assembly; a frame having an open upper portion and accommodating the electrode assembly; a top plate covering the open end of the frame; a first insulating film attached to an inner surface of the frame including an inner surface of a side wall of the frame; and a second insulating film 31 attached to an inner surface of the top plate.

## Description

### [TECHNICAL FIELD]

This application claims the benefit of priority based on Korean Patent Application No. 10-2022-0175923 filed on December 15, 2022, entire content disclosed in the document of the patent applications is included as a part of this specification.

The present invention relates to a battery module including a battery cell laminate and a housing accommodating the same with an insulating structure insulating the battery cell laminate from the housing.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module in which multiple battery cells are electrically connected is used.

Since it is desirable for medium to large-sized battery modules to be manufactured in as small a size and weight as possible, rectangular batteries and pouch-type batteries that may be stacked with high integration and have a small weight-to-capacity battery are mainly used as battery cells for medium to large-sized battery modules.

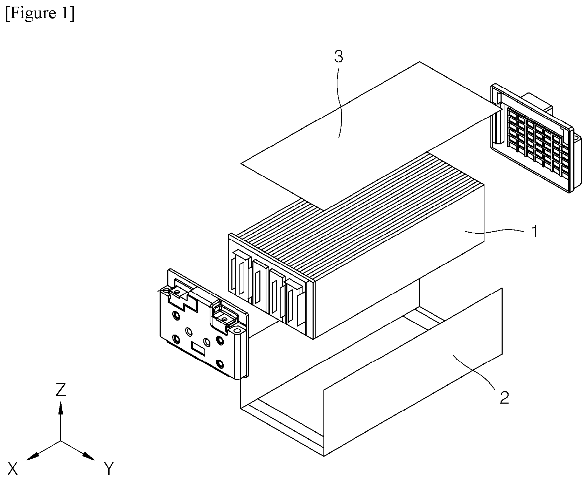

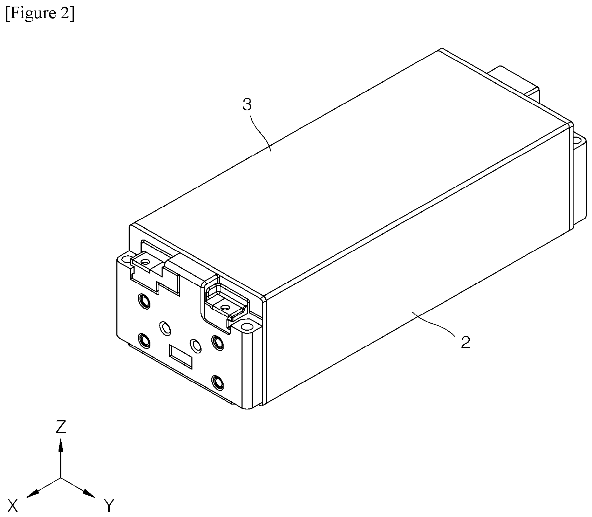

FIGS. 1 and 2 are an exploded perspective view and a perspective view, respectively, illustrating a structure of a battery module. Referring to FIGS. 1 and 2, a general battery module may include a battery cell laminate 1 formed by stacking a plurality of pouch-type battery cells, a frame 2 having an open upper portion and accommodating the battery cell laminate 1, and a top plate 3 covering the upper end of the frame 2. The frame 2 and the top plate 3 may be made of an electrically conductive material such as metal, and may be assembled by bonding using a method such as welding.

Meanwhile, when the frame 2 and the top plate 3 are made of an electrically conductive material such as metal, there is a risk of the frame 2 or the top plate 3 short-circuiting with the battery cell laminate 1. Such short circuit has the risk of causing a fire by causing thermal runaway of the battery cell laminate 1, and even when thermal runaway does not occur, there is a possibility that the battery module may not perform at all or may not fully perform. Therefore, it is desirable that the frame 2 and the top plate 3 are insulated from the battery cell laminate 1.

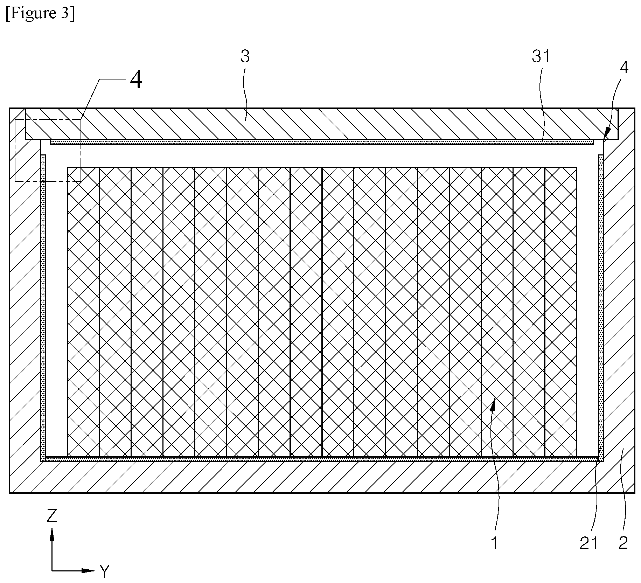

FIG. 3 is a cross-sectional view of the battery module. Referring to FIG. 3, a first insulating film 21 and a second insulating film 31 may be attached to the inner surfaces of the frame 2 and the top plate 3 for insulation from the battery cell laminate 1, respectively. The first insulating film 21 and the second insulating film 31 may be attached to be spaced apart by a predetermined distance from a border 4 whereat the frame 2 and the top plate 3 are bonded. The first insulating film 21 and the second insulating film 31 spaced apart from the border 4 to prevent a poor bonding due to interference between the first insulating film 21 and the second insulating film 31 or to prevent damage to the first insulating film 21 and the second insulating film 31 by heat generated during the welding process in the process of bonding the frame 2 and the top plate 3 to each other at the border 4.

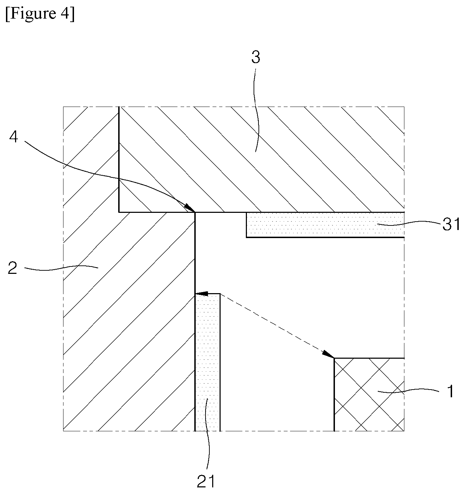

FIG. 4 is a partial enlarged view of a border of the battery module of FIG. 3. Referring to FIG. 4, as the frame 2 and the top plate 3 are exposed to the battery cell laminate 1 at the border 4, a short circuit between the battery cell laminate 1 and the border 4 may occur. Such short circuit may occur when the battery cell laminate 1 contacts the border 4 due to movement or when the insulating distance between the battery cell laminate 1 and the border 4 is too short. Here, the insulating distance may be defined as the length of the shortest path for a current flowing between two objects.

### [DETAILED DESCRIPTION OF THE INVENTION]

### [TECHNICAL PROBLEM]

In order to solve above-described problem of the prior art, it is an object of the present invention to provide a structure of battery module that ensures insulation performance between the frame and top plate and the battery cell laminate.

Specifically, it is an object of the present invention to provide a structure of battery module capable of eliminating or reducing the risk of contact among the frame, top plate and battery cell laminate, and capable of increasing the insulating distance among the frame, top plate and battery cell laminate.

It is another object of the present invention to provide a structure of battery module including an insulating film that does not interfere with the bonding between the frame and the top plate and is not damaged by the bonding.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problems, the present invention provides a structure of a battery module including: an electrode assembly; a frame having an open upper portion and accommodating the electrode assembly; a top plate covering the open end of the frame; a first insulating film attached to an inner surface of the frame including an inner surface of a side wall of the frame; and a second insulating film attached to an inner surface of the top plate.

The battery module according to the present invention includes a structure for ensuring the insulation performance of the first insulating film and the second insulating film. Herein, the insulation performance may refer to a function of preventing a short circuit caused by current flowing among the frame, the top plate and the battery cell laminate, and the insulation performance may be evaluated based on ability to block electrical contact, the ability to secure an insulating distance, and the ability to prevent damage to the insulators. The insulating distance may be defined as the length of the shortest path for a current flowing between two objects.

The battery module may include a first overhang part formed by bending the first insulating film inward at a first bent part spaced apart by a predetermined distance in a heightwise direction from a border where the inner surface of the frame and the inner surface of the top plate may be in contact with each other. By spacing the first insulating film apart from the border by a predetermined distance, the possibility of the first insulating film interfering with the bonding between the frame and the top plate may be reduced or eliminated, and the first insulating film may be prevented from being damaged by welding heat generated during the welding of the frame and the top plate. The predetermined distance may be determined by considering the bonding method between the frame and the top plate and welding heat, etc. when the bonding method between the frame and the top plate is welding.

The first insulating film may include a third bent part provided at a front end of the first overhang part. The first insulating film may be bent inward at both the first bent part and the third bent part. Alternatively, the first insulating film may be bent inward at the first bent part and outward at the third bent part. The direction of bending of the first insulating film at the third bent part may be selected to be suitable for making the current path between the frame and the top plate, and the battery cell laminate more complex, and increasing the insulating distance.

The battery module may include a second overhang part formed by bending the second insulating film inward at a second bent part spaced apart by a predetermined distance in a widthwise direction from the border. By spacing the second insulating film apart from the border by a predetermined distance, the possibility of the second insulating film interfering with the bonding between the frame and the top plate may be reduced or eliminated, and the second insulating film may be prevented from being damaged by welding heat generated during the welding of the frame and the top plate. The predetermined distance may be determined by considering the bonding method between the frame and the top plate and welding heat, etc. when the bonding method between the frame and the top plate is welding.

The second insulating film may include a fourth bent part provided at a front end of the second overhang part. The second insulating film may be bent inward at both the second bent part and the fourth bent part. Alternatively, the second insulating film may be bent inward at the second bent part and outward at the fourth bent part. The direction of bending of the second insulating film at the fourth bent part may be selected to be suitable for making the current path between the frame and the top plate, and the battery cell laminate more complex, and increasing the insulating distance.

The first insulating film and the second insulating film may partially overlap each other in a predetermined direction. Here, "the first insulating film and the second insulating film may partially overlap with each other in a predetermined direction" refers to a structure wherein an imaginary straight line drawn from one point of the first insulating film or the second insulating film in a predetermined direction passes through both the first insulating film and the second insulating film.

Here, the first insulating film and the second insulating film may partially overlap each other in the heightwise direction. Alternatively, the first insulating film and the second insulating film may partially overlap each other in the widthwise direction. Alternatively, the first insulating film and the second insulating film may partially overlap each other in the thicknesswise direction. As the first insulating film and the second insulating film overlap each other, the battery cell laminate may be prevented from being in contact with the frame and the top plate.

The top plate may include a guide unit extending along the border and protruding downward. The guide unit may be formed integrally with the top plate.

The guide unit may include a tapered portion guiding a front end of the first overhang part inward in a widthwise direction as the top plate and the frame approach each other upward and downward, respectively. As a result, the risk of the first insulating film interfering with the bonding between the frame and the top plate is further reduced.

The second insulating film may cover at least a portion of an inner surface of the guide unit. In particular, the second insulating film may cover at least a portion of the tapered portion. The second insulating film may be attached to cover the tapered portion. That is, the second insulating film may include a portion attached to at least a portion of the tapered portion. Here, preferably, the second insulating film does not include the second overhang part2 and may be provided completely attached to the tapered portion. As a result, the oblique contact between with the tapered portion and the first overhang part is further facilitated.

When the second insulating film covers a portion of the guide unit, and the first insulating film is bent inward along the guide unit, the first insulating film and the second insulating film overlap each other, and thus the frame, the top plate and the battery cell laminate may be prevented from being in contact with one another.

The first insulating film and the second insulating film may be bent or overlap with each other as described above to increase the insulating distance between the frame, the top plate and the battery cell laminate.

The first insulating distance, which is the length of the shortest path for a current flowing between the surface of the battery cell laminate and the inner surface of the frame, may be greater than shortest distance between a surface of the battery cell laminate and the inner surface of the frame. That is, by providing the first insulating film and the second insulating film, the insulating distance between the frame and the battery cell laminate may be increased.

Here, the first insulating distance may be at least 1.5 times longer than the shortest distance between the surface of the battery cell laminate and the inner surface of the frame. For example, when the widthwise direction component of the length of the first overhang part is at least 1.5 times longer than the shortest distance between the surface of the battery cell laminate and the inner surface of the frame, the first insulating distance is at least 1.5 times longer than the shortest distance between the surface of the battery cell laminate and the inner surface of the frame.

Alternatively, the first insulating distance is at least twice longer than the shortest distance between the surface of the battery cell laminate and the inner surface of the frame. For example, when the widthwise direction component of the length of the first overhang part is at least twice longer than the shortest distance between the surface of the battery cell laminate and the inner surface of the frame, the first insulating distance is at least twice longer than the shortest distance between the surface of the battery cell laminate and the inner surface of the frame.

The second insulating distance, which is the length of shortest path for a current flowing between the surface of the battery cell laminate and the inner surface of the top plate, may be greater than shortest distance between a surface of the battery cell laminate and the inner surface of the frame. That is, by providing the first insulating film and the second insulating film, the insulating distance between the top plate and the battery cell laminate may be increased.

Here, the second insulating distance may be at least 1.5 times longer than the shortest distance between the surface of the battery cell laminate and the inner surface of the top plate. For example, when the heightwise direction component of the length of the second overhang part2 is at least 1.5 times longer than the shortest distance between the surface of the battery cell laminate and the inner surface of the top plate, the second insulating distance is at least 1.5 times longer than the shortest distance between the surface of the battery cell laminate and the inner surface of the top plate.

Alternatively, the second insulating distance is at least twice longer than the shortest distance between the surface of the battery cell laminate and the inner surface of the top plate. For example, when the heightwise direction component of the length of the second overhang part2 is at least twice longer than the shortest distance between the surface of the battery cell laminate and the inner surface of the top plate, the second insulating distance is at least twice longer than the shortest distance between the surface of the battery cell laminate and the inner surface of the top plate.

The present invention provides a battery pack including the battery module and a vehicle including the battery pack.

A plurality of battery modules may be built into a single pack frame to form a battery pack for high voltage and/or high capacity. The plurality of battery modules are connected in parallel or in series to one another by pack bus bars included in the battery pack to achieve high voltage and capacity as a whole. The battery pack may be built into an electric vehicle that uses secondary batteries as a power source. The battery pack may provide power to the vehicle through a motor built into the vehicle. Since the detailed structures of such battery packs and vehicles are known to those skilled in the art, detailed descriptions thereof are not given herein.

### [ADVANTTAGEOUS EFFECTS]

The present invention may provide a structure of battery module in which the insulating distance between the frame and top plate, and the battery cell laminate is increased.

The present invention may provide a structure of battery module in which direct contact between the frame and top plate, and the battery cell laminate is prevented.

The present invention may provide a structure of battery module with improved insulation performance without interfering with or being damaged by the bonding between the frame and the top plate by providing an overhang part where the insulating film is bent inward.

The present invention may provide a structure of battery module in which the first insulating film and the second insulating film are guided to effectively overlap each other without interfering with the bonding area during the process of assembling the frame and the top plate.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIGS. 1 and 2 are an exploded perspective view and a perspective view, respectively, illustrating a structure of a battery module.
FIG. 3 is a cross-sectional view of the battery module.
FIG. 4 is a partial enlarged view of a border of the battery module of FIG. 3.
FIG. 5 is a cross-sectional view of a battery module according to a first embodiment of the present invention.
FIG. 6 is a partial enlarged view of a border of the battery module of FIG. 5.
FIG. 7 is a cross-sectional view of a battery module according to a second embodiment of the present invention.
FIG. 8 is a partial enlarged view of a border of the battery module of FIG. 7.
FIGS. 9 and 10 are cross-sectional views illustrating a top plate and a frame of a battery module before and after assembly, respectively, according to a third embodiment of the present invention.
FIGS. 11 and 12 are partial enlarged views of a border of the battery module of FIGS. 9 and 10, respectively.
FIG. 13 illustrates a battery pack with a battery module according to the present invention built therein, and FIG. 14 illustrates a vehicle with the battery pack of FIG. 13 built therein.

### [DESCRIPTION OF REFERENCE NUMERALS]

1: battery cell laminate
2: frame
   21: first insulating film
   211: first bent part
   212: first overhang part
   213: third bent part
3: top plate
   31: second insulating film
      311: second bent part
      312: second overhang part
      313: fourth bent part
   32: guide unit
      321: tapered portion
4: border
M: battery module
P: battery pack
V: vehicle
X: lengthwise direction
Y: widthwise direction
Z: heightwise direction

### [MODE FOR THE INVENTION]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

In addition, the expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.
the present invention provides a structure of a battery module including: an electrode assembly formed by stacking a plurality of pouch-type battery cells; a frame having an open upper portion and accommodating the electrode assembly; a top plate covering the open end of the frame; a first insulating film attached to an inner surface of the frame including an inner surface of a side wall of the frame; and a second insulating film attached to an inner surface of the top plate.

The battery module according to the present invention includes a structure for ensuring the insulation performance of the first insulating film and the second insulating film. Herein, the insulation performance may refer to a function of preventing a short circuit caused by current flowing among the frame, the top plate and the battery cell laminate, and the insulation performance may be evaluated based on ability to block electrical contact, the ability to secure an insulating distance, and the ability to prevent damage to the insulators. The insulating distance may be defined as the length of the shortest path for a current flowing between two objects.

Hereinafter, a preferred embodiment of the present invention will be described with reference to the accompanying drawings.

### [FIRST EMBODIMENT]

FIGS. 1 and 2 are an exploded perspective view and a perspective view, respectively, illustrating a structure of a battery module. Referring to FIGS. 1 and 2, the battery module may include a battery cell laminate 1, a frame 2 and a top plate 3.

The battery cell laminate 1 may be formed by stacking pouch-type battery cells. However, the battery cell laminate 1 is not limited thereto, and, despite the term, the battery cell laminate 1 may be an assembly of various electrodes or battery cells.

The battery cell laminate 1 may be accommodated in the frame 2. The frame 2 may have an open upper portion. The frame 2 may include an electrically conductive material. The frame may be made of metal material.

The upper portion of the frame 2 may be covered by the top plate 3. The top plate may include an electrically conductive material. The top plate 3 may be made of metal material.

The frame 2 and the top plate 3 may be bonded to each other. Hereinafter, the area where the frame 2 and the top plate 3 are bonded is referred to as a border. Here, the border is an inner boundary of the frame 2 and the top plate 3 when the frame 2 and the top plate 3 are bonded to each other. The border may refer to the corresponding portion of the frame 2 or to the corresponding portion of the top plate 3.

According to the first embodiment, the frame 2 and the top plate 3 may include metal material, and the bonding may be achieved by welding. Inside the two upper ends of the sidewall of the frame 2, a step portion recessed to engage with the top plate 3 may be provided. In such case, the border may refer to the innermost end of the step portion and a portion of the top plate 3 corresponding thereto.

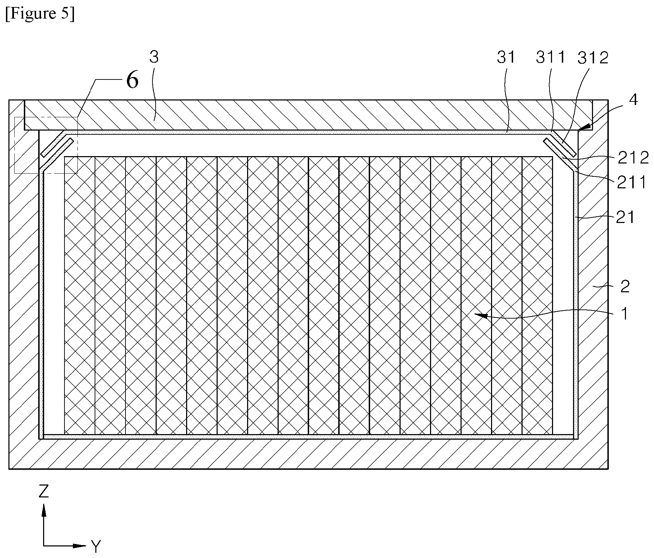

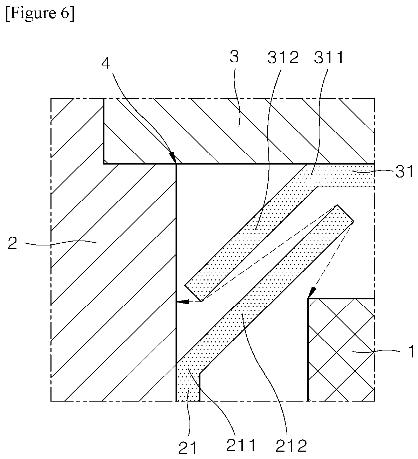

FIG. 5 is a cross-sectional view of a battery module according to a first embodiment of the present invention, and FIG. 6 is a partial enlarged view of a border of the battery module of FIG. 5. Referring to FIGS. 5 and 6, the battery module may include one or more insulating films that insulate the frame 2, the top plate 3 and the battery cell laminate 1 from one another. The insulating film may be made of a material with insulating property or may be coated with a material with insulating property. The insulating film may have a predetermined degree of elasticity.

The first insulating film 21 may be attached to the inner surface of the frame 2. Specifically, the first insulating film 21 may be attached to the inner surface of the frame 2, including the inner surfaces of two side walls of the frame 2. The attachment boundary of the first insulating film 21 may be a first bent part 211 spaced apart from the border 4 in the heightwise direction by a predetermined distance. The first insulating film 21 may be bent inward from the first bent part 211 to form a first overhang part 212. The first overhang part 212 may extend from the first bent part 211 without being attached to the inner surface of the frame 2. The predetermined distance may be determined by considering the bonding method between the frame and the top plate and welding heat, etc. when the bonding method between the frame and the top plate is welding.

The second insulating film 23 may be attached to the inner surface of the top plate 3. Specifically, the second insulating film 23 may be attached to the inner surface of the top plate 3, including the inner surfaces of two side walls of the top plate 3. The attachment boundary of the second insulating film 23 may be a second bent part 311 spaced apart from the border 4 in the widthwise direction by a predetermined distance. The second insulating film 23 may be bent inward from the second bent part 311 to form a second overhang part 312. The second overhang part 312 may extend from the second bent part 311 without being attached to the inner surface of the top plate 3. The predetermined distance may be determined by considering the bonding method between the frame and the top plate and welding heat, etc. when the bonding method between the frame and the top plate is welding.

The battery module according to the first embodiment may include the first insulating film 21 and the second insulating film 31. The first insulating film 21 may be attached to the inner surface of two side walls of the frame 2 and bent inward from the first bent part 211 spaced apart from the border 4 in the heightwise direction by a predetermined distance to form a first overhang part 212. The second insulating film 31 may be attached to the inner surface of the top plate 3 and bent inward from the second bent part 311 spaced apart from the border 4 in the widthwise direction by a predetermined distance to form the overhang part 312.

According to the first embodiment, the first insulating film 21 and the second insulating film 31 are attached to be spaced apart from the border 4 by a predetermined distance, thereby preventing interference with bonding of the frame 2 and the top plate 3. Accordingly, the frame 2 and the top plate 3 may have sufficient bonding strength as designed. **In** addition, as the first insulating film 21 and the second insulating film 31 are attached to be spaced apart from the border 4 as described above, the damage to the first insulating film 21 and the second insulating film 31 caused by welding heat generated during the welding of the frame 2 and the top plate 3 may also be prevented.

**In** addition, according to the first embodiment, the first overhang part 212 and the second overhang part 312 extend inward to be disposed along the shortest path from the battery cell laminate 1 to the frame 2 and the top plate 3. As a result, the insulating distance may increase since the path from the battery cell laminate 1 to the frame 2 and the top plate 3 through which a current flows becomes complex.

The first insulating film 21 and the second insulating film 31 may partially overlap with each other in a predetermined direction. Here, "the first insulating film 21 and the second insulating film 31 may partially overlap with each other in a predetermined direction" refers to a structure wherein an imaginary straight line drawn from one point of the first insulating film 21 or the second insulating film 31 in a predetermined direction passes through both the first insulating film 21 and the second insulating film 31.

Here, the first insulating film 21 and the second insulating film 31 may partially overlap with each other in the heightwise direction. Alternatively, the first insulating film 21 and the second insulating film 31 may partially overlap with each other in the widthwise direction. Alternatively, the first insulating film 21 and the second insulating film 31 may partially overlap with each other in the thicknesswise direction.

The first insulating film 21 and the second insulating film 31 according to the first embodiment may overlap with each other in heightwise direction, widthwise direction or thicknesswise direction. Here, the overlapping portion may be portions of the first overhang part 212 and the second overhang part 312. That is, when the imaginary straight lines are drawn in the heightwise direction, the widthwise direction and the thicknesswise direction from one point of the first overhang part 212, at least one of the imaginary straight lines may pass through the second overhang part 312.

According to the first embodiment, the first insulating film 21 and the second insulating film 31 overlap each other such that the contact between the battery cell laminate 1 and the frame 2 and the top plate 3 may be prevented, and the path from the battery cell laminate 1 to the frame 2 and the top plate 3 through which a current flows becomes complex, thereby increasing the insulating distance.

As described above, the first insulating film 21 and the second insulating film 31 are bent or overlap with each other to increase the insulating distance between the frame 2 and the top plate 3, and the battery cell laminate 1.

The first insulating distance, which is the length of the shortest path for a current flowing between the surface of the battery cell laminate 1 and the inner surface of the frame 2, may be greater than shortest distance between a surface of the battery cell laminate 1 and the inner surface of the frame 3. That is, by providing the first insulating film 21 and the second insulating film 31, the insulating distance between the frame 2 and the battery cell laminate 1 may be increased.

Here, the first insulating distance may be at least 1.5 times longer than the shortest distance between the surface of the battery cell laminate 1 and the inner surface of the frame 2. For example, when the widthwise direction component of the length of the first overhang part 212 is at least 1.5 times longer than the shortest distance between the surface of the battery cell laminate 1 and the inner surface of the frame 2, the first insulating distance is at least 1.5 times longer than the shortest distance between the surface of the battery cell laminate 1 and the inner surface of the frame 2.

Alternatively, the first insulating distance is at least twice longer than the shortest distance between the surface of the battery cell laminate 1 and the inner surface of the frame 2. For example, when the widthwise direction component of the length of the first overhang part 212 is at least twice longer than the shortest distance between the surface of the battery cell laminate 1 and the inner surface of the frame 2, the first insulating distance is at least twice longer than the shortest distance between the surface of the battery cell laminate 1 and the inner surface of the frame 2.

The second insulating distance, which is the length of shortest path for a current flowing between the surface of the battery cell laminate 1 and the inner surface of the top plate 3, may be greater than shortest distance between a surface of the battery cell laminate 1 and the inner surface of the frame 3. That is, by providing the first insulating film 21 and the second insulating film 31, the insulating distance between the top plate 3 and the battery cell laminate 1 may be increased.

Here, the second insulating distance may be at least 1.5 times longer than the shortest distance between the surface of the battery cell laminate 1 and the inner surface of the top plate 3. For example, when the heightwise direction component of the length of the second overhang part 312 is at least 1.5 times longer than the shortest distance between the surface of the battery cell laminate 1 and the inner surface of the top plate 3, the second insulating distance is at least 1.5 times longer than the shortest distance between the surface of the battery cell laminate 1 and the inner surface of the top plate 3.

Alternatively, the second insulating distance is at least twice longer than the shortest distance between the surface of the battery cell laminate 1 and the inner surface of the top plate 3. For example, when the heightwise direction component of the length of the second overhang part 312 is at least twice longer than the shortest distance between the surface of the battery cell laminate 1 and the inner surface of the top plate 3, the second insulating distance is at least twice longer than the shortest distance between the surface of the battery cell laminate 1 and the inner surface of the top plate 3.

The first overhang part 212 and the second overhang part 312 according to the first embodiment may form an angle of 45 degrees with the frame 2 and the top plate 3, respectively. Here, the lengths of the first overhang part 212 and the second overhang part 312 may be at least 1.5 times longer or at least twice longer than the shortest distance between the battery cell laminate 1 and the frame 2 and the shortest distance between the battery cell laminate 1 and the top plate 3, respectively.

According to the first embodiment, the widthwise direction component of the first overhang part 212 and the heightwise direction component of the second overhang part 312 may be at least 1.5 times longer than the shortest distance between the battery cell laminate 1 and the frame 2 and the shortest distance between the battery cell laminate 1 and the top plate 3, respectively. In such case, the first insulating distance and the second insulating distance may be at least 1.5 times longer than the shortest distance between the battery cell laminate 1 and the frame 2 and the shortest distance between the battery cell laminate 1 and the top plate 3, respectively.

### [SECOND EMBODIMENT]

Hereinafter, descriptions of parts not separately described in detail in the second embodiment are the same as those of the first embodiment.

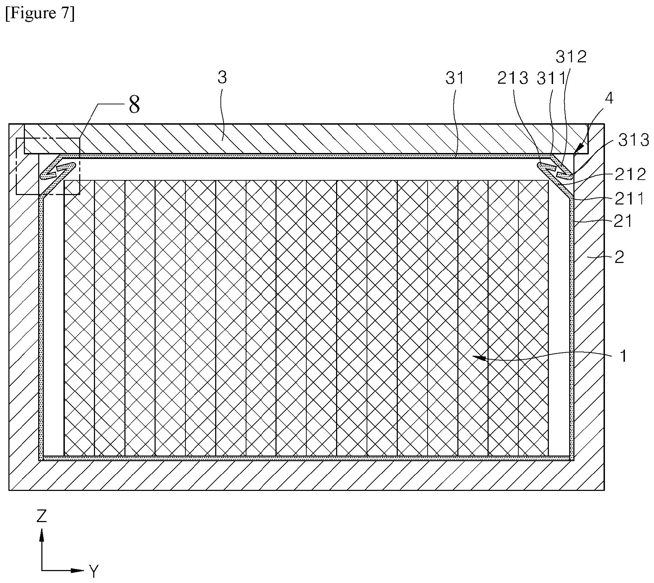

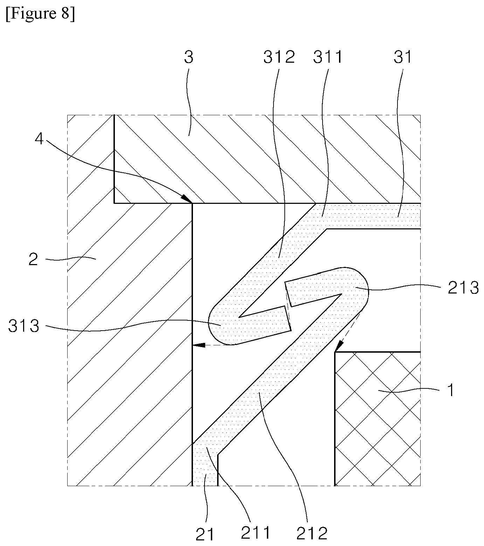

FIG. 7 is a cross-sectional view of a battery module according to a second embodiment of the present invention, and FIG. 8 is a partial enlarged view of a border of the battery module of FIG. 7. Referring to FIGS. 7 and 8, the first insulating film 21 and/or the second insulating film 31 may include a third bent part 213 and/or a fourth bent part 313, respectively, formed by bending the front end of the first overhang part 212 and/or the second overhang part 312.

The first insulating film 21 may include a third bent part 213 provided at the front end of the first overhang part 212.

The first insulating film 21 may be bent in the same direction at the first bent part 211 and the third bent part 213 or in different directions at the first bent part 211 and the third bent part 213. That is, the first insulating film 21 may be bent inward at both the first bent part 211 and the third bent part 213, or the first insulating film 21 may be bent inward at the first bent part 211 and outward at the third bent part 213. The direction of bending of the first insulating film 21 at the third bent part 213 may be selected to be suitable for making the current path between the frame 2 and the top plate 3, and the battery cell laminate 1 more complex, and increasing the insulating distance.

The second insulating film 31 may include the fourth bent part 313 provided at the front end of the second overhang part 312.

The second insulating film 31 may be bent in the same direction at the second bent part 311 and the fourth bent part 313 or in different directions at the second bent part 311 and the fourth bent part 313. That is, the second insulating film 31 may be bent inward at both the second bent part 311 and the fourth bent part 313, or the second insulating film 31 may be bent inward at the second bent part 311 and outward at the fourth bent part 313. The direction of bending of the second insulating film 31 at the fourth bent part 313 may be selected to be suitable for making the current path between the frame 2 and the top plate 3, and the battery cell laminate 1 more complex, and increasing the insulating distance.

The first insulating film 21 and the second insulating film 31 according to the second embodiment may include the third bent part 213 and the fourth bent part 313, respectively. Here, the first insulating film 21 may be bent in different directions at the first bent part 211 and the third bent part 213, and the second insulating film 31 may be bent in the same direction at the second bent part 311 and the fourth bent part 313. Accordingly, the front end of the first overhang part 212 and the front end of the second overhang part 312 may be bent in directions facing each other, and the first overhang part 212 and the second overhang part 312 may be interlocked with each other.

According to the second embodiment, the first overhang part 212 and the second overhang part 312 are engaged or further overlap each other such that the contact between the battery cell laminate 1, the frame 2 and the top plate 3 are prevented more reliably, and the insulating distance may be further increased.

### [THIRD EMBODIMENT]

Hereinafter, descriptions of parts not separately described in detail in the third embodiment are the same as those of the first embodiment and the second embodiment.

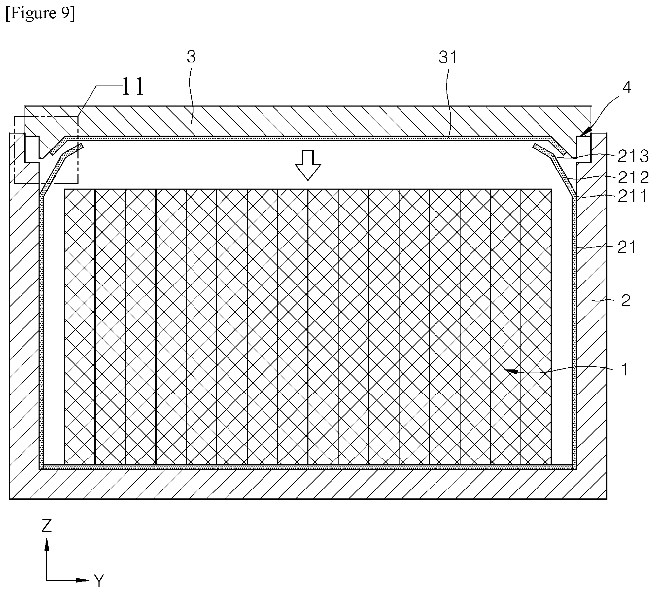

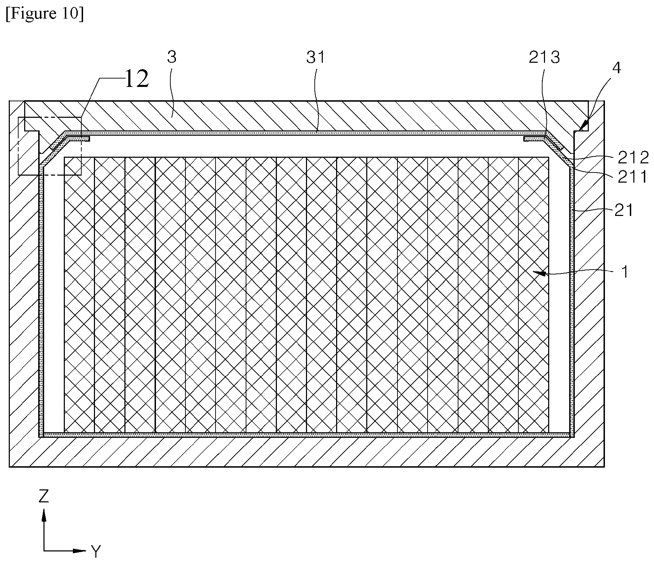

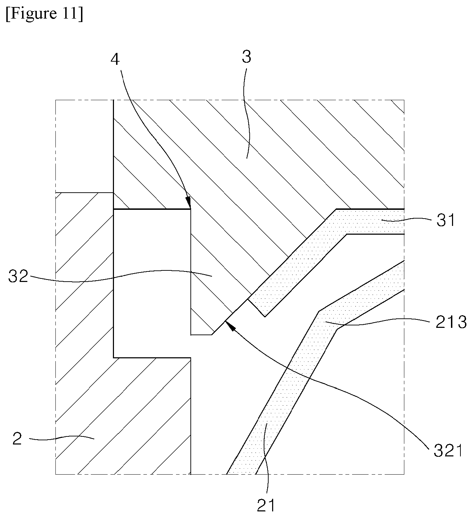

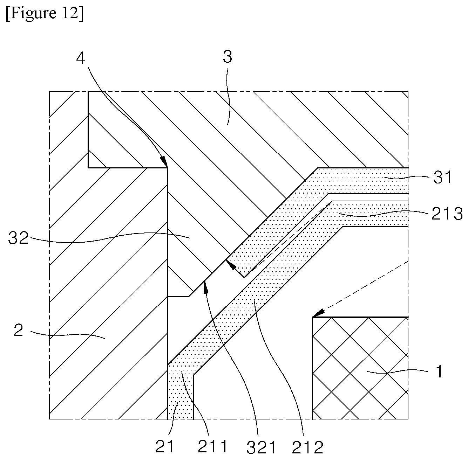

FIGS. 9 and 10 are cross-sectional views illustrating a top plate and a frame of a battery module before and after assembly, respectively, according to a third embodiment of the present invention, and FIGS. 11 and 12 are partial enlarged views of a border of the battery module of FIGS. 9 and 10, respectively. Referring to FIGS. 9 to 12, the top plate 3 may include a guide unit 32. The guide unit 32 extends from the top plate 3 along the border 4 and protrudes downward. The guide unit 32 may be formed integrally with the top plate 3.

The guide unit 32 may include a tapered portion 321. The tapered portion 321 may be inclined inner side surface of the guide unit 32 narrowing outward toward downward direction. The tapered portion 321 makes oblique contact with the first overhang part 212 as the frame 2 and the top plate 3 approach each other upward and downward, respectively, thereby guiding the front end of the first overhang part 212 inward in a widthwise direction.

The second insulating film 31 may cover at least a portion of an inner surface of the guide unit 32. In particular, the second insulating film 31 may cover at least a portion of the tapered portion 321. The second insulating film 31 may be attached to cover the tapered portion 321. That is, the second insulating film 31 may include a portion attached to at least a portion of the tapered portion 321. Here, preferably, the second insulating film 31 does not include the second overhang part 312 and may be provided completely attached to the tapered portion 321. As a result, the oblique contact between with the tapered portion 321 and the first overhang part 212 is further facilitated.

In the battery module according to the third embodiment, the top plate 3 may include the guide unit 32 extending along the border 4 and protruding downward. The guide unit 32 may be formed integrally with the top plate 3. The guide unit 32 may include the tapered portion 321 on inclined inner side surface thereof. The second insulating film 31 may be attached to extend to a portion of the tapered portion 321.

According to the third embodiment, since the first overhang part 212 makes oblique contact with the tapered portion 321 to be guided inward in the widthwise direction, and the second insulating film 31 is attached to the tapered portion 321, the first insulating film 21 and the second insulating film 31 overlap with each other in the thicknesswise direction to completely block the contact between the battery cell laminate 1, the frame 2, and the top plate 3 and significantly increase the insulating distance.

In addition, according to the third embodiment, through the action of the guide unit 32 guiding the first overhang part 212 inward in the widthwise direction, there is even less risk of the first insulating film 21 interfering with the bonding of the frame 2 and the top plate 3. Since the second insulating film 31 is attached to the tapered portion 321, the second insulating film 31 is not able to reach the outside of the guide unit 32 where the border 4 is located. Therefore, the second insulating film 31 does not interfere with the bonding of the frame 2 and the top plate 3. Here, apparently, the risk of damaging the first insulating film 21 and the second insulating film 31 caused by welding heat between the frame 2 and the top plate 3 is also greatly reduced.

The present invention also provides a battery pack with the battery module built therein and a vehicle with the battery pack therein.

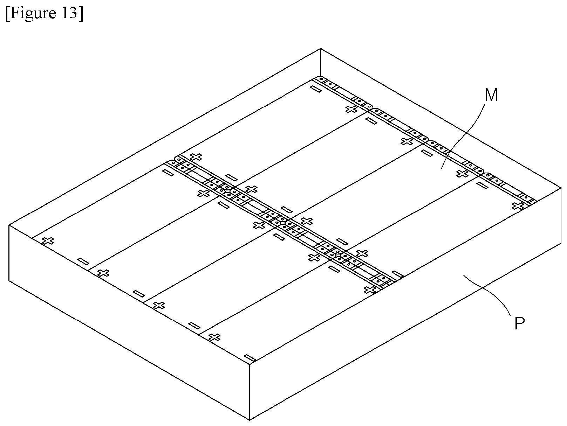

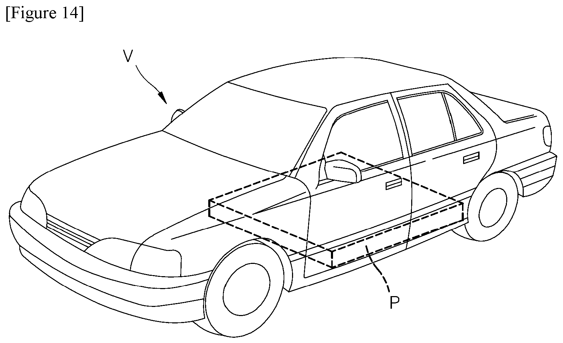

FIG. 13 illustrates a battery pack with a battery module according to the present invention built therein, and FIG. 14 illustrates a vehicle with the battery pack of FIG. 13 built therein. Referring to FIGS. 13 and 14, a plurality of battery modules M may be built into a single pack frame to form a battery pack P for high voltage and/or high capacity. The plurality of battery modules M are connected in parallel or in series to one another by pack bus bars included in the battery pack P to achieve high voltage and capacity as a whole. The battery pack P may be built into an electric vehicle V that uses secondary batteries as a power source. The battery pack P may provide power to the vehicle V through a motor built into the vehicle V. Since the detailed structures of such battery packs and vehicles are known to those skilled in the art, detailed descriptions thereof are not given herein.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery module comprising:
a battery cell laminate;
a frame having an open upper portion and accommodating the battery cell laminate;
a top plate covering the open end of the frame;
a first insulating film attached to an inner surface of the frame including an inner surface of a side wall of the frame;
a second insulating film 31 attached to an inner surface of the top plate; and
one of: a first overhang part formed by bending the first insulating film inward at a first bent part spaced apart by a predetermined distance in a heightwise direction from a border where the inner surface of the frame and the inner surface of the top plate are in contact with each other; and a second overhang part formed by bending the second insulating film 31 inward at a second bent part spaced apart by a predetermined distance in the widthwise direction from the border.

2. The battery module of claim 1, wherein the first insulating film comprises a third bent part provided at a front end of the first overhang part.

3. The battery module of claim 2, wherein a direction of bending at the first bent part is different from a direction of bending at the third bent part of the first insulating film.

4. The battery module of claim 2, wherein a direction of bending at the first bent part of the first insulating film is same as a direction of bending at the third bent part of the first insulating film.

5. The battery module of claim 1, wherein the second insulating film comprises a fourth bent part provided at a front end of the second overhang part.

6. The battery module of claim 5, wherein a direction of bending at the second bent part of the second insulating film 31 is different from a direction of bending at the fourth bent part of the second insulating film 31.

7. The battery module of claim 5, wherein a direction of bending at the second bent part of the second insulating film 31 is same as a direction of bending at the fourth bent part of the second insulating film 31.

8. The battery module of claim 1, wherein the first insulating film and the second insulating film 31 partially overlap each other in the heightwise direction.

9. The battery module of claim 1, wherein the first insulating film and the second insulating film 31 partially overlap each other in the widthwise direction.

10. The battery module of claim 1, wherein the first insulating film and the second insulating film 31 partially overlap each other in the thicknesswise direction.

11. The battery module of claim 1, wherein the top plate comprises a guide unit extending along the border and protruding downward, the guide unit including a tapered portion guiding a front end of the first overhang part inward in a widthwise direction as the top plate and the frame approach each other upward and downward, respectively.

12. The battery module of claim 11, wherein the second insulating film 31 covers at least a portion of an inner surface of the guide unit.

13. The battery module of claim 11, wherein the second insulating film 31 covers at least a portion of the tapered portion.

14. The battery module of claim 13, wherein the second insulating film 31 is attached to at least a portion of the tapered portion.

15. The battery module of claim 1, wherein a first insulating distance is greater than shortest distance between a surface of the battery cell laminate and the inner surface of the frame, the first insulating distance being a length of shortest path for a current flowing between the surface of the battery cell laminate and the inner surface of the frame.

16. The battery module of claim 15, wherein the first insulating distance is at least 1.5 times longer than the shortest distance between the surface of the battery cell laminate and the inner surface of the frame.

17. The battery module of claim 16, wherein the first insulating distance is at least twice longer than the shortest distance between the surface of the battery cell laminate and the inner surface of the frame.

18. The battery module of claim 1, wherein a second insulating distance is greater than shortest distance between a surface of the battery cell laminate and the inner surface of the top plate, the second insulating distance being a length of shortest path for a current flowing between the surface of the battery cell laminate and the inner surface of the top plate.

19. The battery module of claim 18, wherein the second insulating distance is at least 1.5 times longer than the shortest distance between the surface of the battery cell laminate and the inner surface of the top plate.

20. The battery module of claim 19, wherein the second insulating distance is at least twice longer than the shortest distance between the surface of the battery cell laminate and the inner surface of the top plate.

21. A battery pack including a battery module of any one of claims 1 to 20.

22. A vehicle including a battery pack of claim 21.
